# EUROPÄISCHE PATENTANMELDUNG

(11) **EP 1 092 954 A1**
(43) Veröffentlichungstag der Anmeldung: **18.04.2001**
(21) Anmeldenummer: 00122565.5
(22) Anmeldetag: 16.10.2000
(51) Int. Cl.: G01D 3/028

(54) **Vorrichtung und Verfahren zur Verminderung der Störungsempfindlichkeit eines Messinstrumentes**

(30) Priorität: 14.10.1999 DE 19949623
(71) Anmelder: ASM AUTOMATION, SENSORIK, MESSTECHNIK GMBH, D-85452 Moosinning (DE)
(72) Erfinder: Wirth, Peter, 85386 Eching (DE); Steinich, Klaus-Manfred, 85604 Poering (DE)
(74) Vertreter: Alber, Norbert, Dipl.-Ing.

(57) **Zusammenfassung**

Die Erfindung betrifft einen Meßumformer für potentiometrische Positions- oder Winkelsensoren und ein Verfahren zur Erhöhung der Störfestigkeit eines solchen Meßumformers gegen Störspannungen ohne Einsatz von Funkentstörfiltern. Ein erfindungsgemäßer Meßumformer, der über Anschlußleitungen eingangsseitig mit einem Sensor und ausgangsseitig mit einer Folgeelektronik verbunden ist, kennzeichnet sich dadurch, daß die eingangs- und ausgangsseitigen Anschlußleitungen erste Impedanzen aufweisen und ein abgeglichener Schaltungsknoten vorgesehen ist, der über jeweils eine zweite Impedanz mit den eingangs- bzw. ausgangsseitigen Anschlußleitungen sowie mit einem störempfindlichen Schaltungsknoten des elektronischen Meßumformers verbunden ist.

## Beschreibung

Die Erfindung betrifft einen störfesten Meßumformer für potentiometrische Positions- oder Winkelsensoren, insbesondere zur Verwendung mit Meßseil-Positionssensoren, und ein Verfahren zur Erhöhung der Störfestigkeit eines solchen Meßumformers gegen Störspannungen.

Meßumformer formen die von den Sensorelementen ausgegebenen Meßsignale i.d.R. in ein einheitliches Gleichstromsignal mit eingeprägter Stromstärke um. Üblicherweise beträgt der Bereich des Stromsignals 4 - 20 mA. Dem Meßumformer ist eine Folgeelektronik nachgeschaltet, die den eingeprägten Meßsignalstrom auswertet und gleichzeitig eine Betriebsspannung liefert, die dem Meßumformer über zwei Leitungen zugeführt wird. Der abhängig von der Meßgröße eingeprägte Meßsignalstrom dient zugleich der Erregung des Sensorelements und versorgt die elektronische Schaltung des Meßumformers mit einem Signalstromanteil.

Bisher bekannte Meßumformer sind empfindlich gegen leitungsgebundene oder eingestrahlte hochfrequente, elektromagnetische Strahlung im Frequenzbereich von ca. 100 kHz bis zu einem GHz, wobei es unerheblich ist, ob diese als diskrete oder als hochintegrierte Schaltung aufgebaut sind. Besonders Weg- und Winkelsensoren sind aufgrund ihrer Montage unmittelbar am Meßort solchen Störungen ausgesetzt. Die hochfrequenten Störsignale gelangen durch elektromagnetische Kopplung über die Anschlußleitungen oder das Sensorgehäuse in die Schaltkreise der Meßumformerschaltung und bewirken aufgrund von Gleichrichteffekten an Halbleiterübergängen einen störwirksamen Gleichanteil, der sich den elektrischen Signalen überlagert. Ist die EMV (elektromagnetische Verträglichkeit) eines solchen Meßsystems nicht gewährleistet, so kann sich das inbesondere im zufälligen Auftreten vorübergehender Funktionsstörungen mit den damit verbundenen ökonomischen oder sicherheitstechnischen Konsequenzen äußern.

Zur Einhaltung der EMV werden bei elektronischen Meßsystemen üblicherweise Funkentstörfilter eingesetzt, welche die auf den elektrischen Leitungen des Systems geführten hochfrequenten elektromagnetischen Störungen dämpfen bzw. unterdrücken. Der Dämpfungserfolg ist dabei auf einen bestimmten Frequenzbereich beschränkt und hängt in starkem Maße von dem richtigen Zusammenwirken des Funkentstörfilters mit dem Meßsystem ab. Für jeden speziellen Anwendungsfall war es bisher erforderlich, ein in der Einfügungsdämpfung passendes Filter zu entwickeln.

Eine andere Methodik zur Befilterung insbesondere differentiell auftretender Störspannungen auf den eingangs- und ausgangsseitigen Anschlußleitungen eines Zweidraht-Meßumformers ist in dem Datenblatt Burr-Brown XTR 106, Juni 1998 beschrieben. Die Bedämpfung der hochfrequenten elektromagnetischen Störungen erfolgt dadurch, daß zwischen die eingangs- und ausgangsseitigen Anschlußleitungen des Meßumformers, jeweils ein Kondensator geschaltet ist. Nachteil dieser Befilterung ist, daß nur differentiell auftretende Störspannungen außerhalb des aktiven Teils XTR 106 des Meßumformers bedämpft werden und daß über die Quellimpedanz der Störungen keine Annahmen getroffen werden können. Gleichtaktstörungen werden durch die beschriebene Befilterung nicht bedämpft.

Im Frequenzberich ab 100 kHz treten jedoch leitungsgebundene Störungen überwiegend als Gleichtakt-Wechselspannungen in den angeschlossenen Leitungen auf. Wird die Gleichtaktstörung dem aktiven Teil der Meßumformerschaltung zugeführt, entstehen zwischen Pfaden unterschiedlicher Teilimpedanzen differentielle Stör-Wechselspannungen. In Verbindung mit Gleichrichteffekten an den Halbleiterelementen bilden sich dann Stör-Gleichspannungen, die sich dem Meßsignal als Fehlerspannung überlagern.

Andere Befilterungen sehen eine Ableitung der hochfrequenten Störungen gegen die Gehäusemasse des Sensors vor. Nachteil dieser Befilterung ist, daß die Gehäusemasse häufig undefiniert ist und oft selbst als Störquelle fungiert. Ein weiterer Nachteil ist, daß ein zusätzlicher Anschluß zur Gehäusemasse des Sensors vorgesehen werden muß.

Es ist daher die Aufgabe gemäß der Erfindung, die Störfestigkeit von Meßsystemen, insbesondere eines Meßumformers für potentiometrische Positions- oder Winkelsensoren, ohne Einsatz von Funkentstörfiltern in einfacher Weise zu verbessern.

Gelöst wird diese Aufgabe durch die in den unabhängigen Ansprüchen angegebenen Merkmale. Zweckmäßige Ausgestaltungen der Erfindung ergeben sich aus den Unteransprüchen.

Der Erfolg der vorgeschlagenen Beschaltung des Meßsystems beruht nicht auf einer möglichst vollständigen Bedämpfung der auf den Anschlußleitungen des Systems geführten hochfrequenten elektromagnetischen Störgrößen, sondern im Gegenteil darauf, daß die leitungsbehafteten Störgrößen zu wenigstens einem störungsempfindlichen Schaltungsknoten geleitet werden. Mit dem Begriff 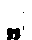 störungsempfindlicher Schaltungsknoten" sind neben solchen Netzwerkknoten auch alle relevanten Schaltungspunkte gemeint, insbesondere relevante Anschlußpunkte störungsempfindlicher elektronischer Bauelemente.

Die im Frequenzbereich ab 100 kHz überwiegend auftretende Gleichtaktstörung wird vorzugsweise auf alle relevanten Schaltungsknoten gleichmäßig verteilt, wodurch differentielle Stör-Wechselspannungen in dem aktiven Teil des Meßumformers erst gar nicht entstehen. Lange Schaltungspfade, die aufgrund ihrer Eigenimpedanz zu differentiellen Stör-Wechselspannungen führen können, werden überbrückt, indem die auf den Anschlußleitungen vorhandenen Gleichtakt-Störspannungen direkt auf relevante Schaltungsknoten geführt werden.

Die gleichmäßige Verteilung der Störgrößen auf relevante Schaltungsknoten wird dadurch erreicht, daß in den eingangs- und ausgangsseitigen Anschlußleitungen erste Impedanzen in Reihe mit den Leitungen vorgesehen sind und wenigstens ein abgeglichener Schaltungsknoten geschaffen wird, der über jeweils eine zweite Impedanz mit den eingangs- oder ausgangsseitigen Anschlußleitungen sowie mit einem störempfindlichen Schaltungsknoten der elektronischen Meßschaltung verbunden ist.

Als abgeglichener Schaltungsknoten wird also der Mittelpunkt einer aus zwei zweiten Impedanzen (vorzugsweise Kondensatoren) bestehenden Reihenschaltung verstanden, die zwischen zwei der eingangsseitigen bzw. ausgangsseitigen Anschlußleitungen geschaltet ist. Ein abgeglichener Schaltungsknoten kann auch mit einem störempfindlichen Schaltungsknoten des Meßumformers identisch sein.

Die in die Anschlußleitungen eingefügten ersten Impedanzen sind vorzugsweise als Induktivitäten vorgesehen, die eine Mindest-Quellimpendanz für ein auf den Anschlußleitungen geführtes Gleichtakt-Störsignal bilden. Die zwischen die Anschlußleitungen und den abgeglichenen Schaltungsknoten geschalteten zweiten Impedanzen sind vorzugsweise als Kondensatoren vorgesehen. Die Quellimpedanz der Induktivitäten führt in Verbindung mit den genannten Kapazitäten zu einer gleichmäßigen Bedämpfung der Gleichtakt-Störspannungen. Die Ausbildung von differentiellen Störspannungen wird durch die Kapazitäten verhindert.

Eine weitere Verbesserung der Störfestigkeit des Meßumformers kann erreicht werden, wenn eingangsseitige leitungsgebundene Stör-Wechselspannungen nicht nur auf relevante Schaltungsknoten in dem aktiven Schaltungsteil, sondern auch auf einen ausgangsseitigen abgeglichenen Schaltungsknoten geführt werden und umgekehrt. Zu diesem Zweck ist wenigstens ein eingangsseitiger abgeglichener Schaltungsknoten mit wenigstens einem ausgangsseitigen abgeglichenen Schaltungsknoten verbunden. Eingangsseitig bedeutet in diesem Zusammenhang dem Sensor zugewandt, ausgangsseitig der Folgeelektronik zugewandt.

Die Wechselspannungs-Ankopplung der relevanten Schaltungsknoten des aktiven Schaltungsteils an die externen Leitungen zum Sensorelement oder zur Folgeschaltung ist vorzugsweise symmetrisch gebildet.

Bei Anwendung eines potentiometrischen Zweitdraht-Meßumformers ist an den Schleiferanschluß des Potentiometers eine erste Impedanz, vorzugsweise eine Induktivität angeschlossen. Die erste Impedanz ist wiederum mit einem abgeglichenen Schaltungsknoten verbunden, der jeweils vorzugsweise kapazitiv an den positiven und negativen Signalanschluß des Meßumformers gekoppelt ist.

Einer der abgeglichenen Schaltungsknoten bildet vorzugsweise einen virtuellen Nullpunkt des aktiven Teils des Meßumformers.

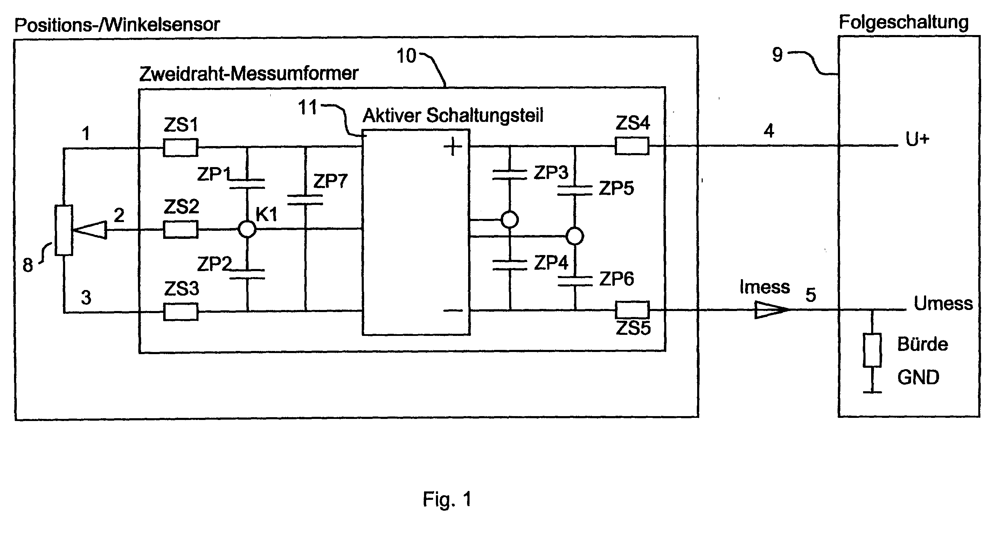

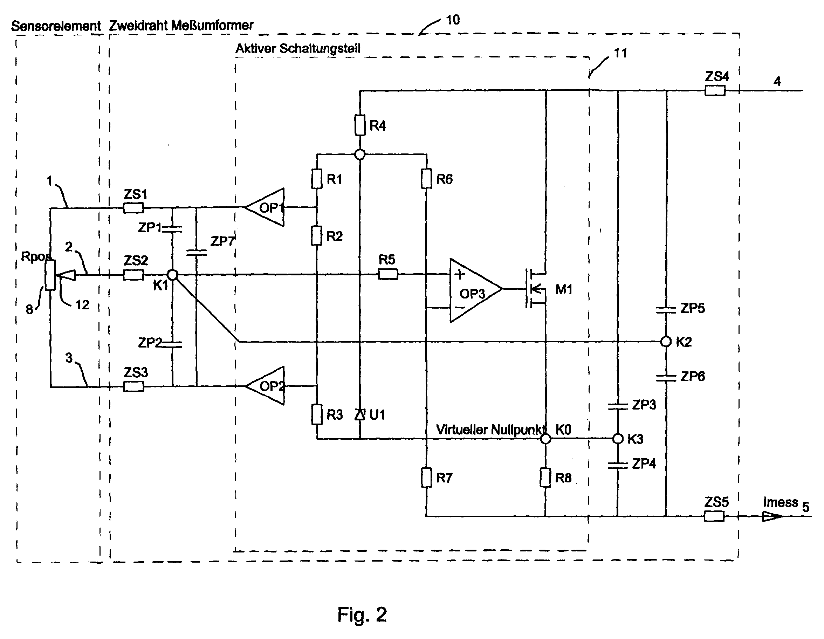

Die Erfindung wird nachstehend anhand der Figuren 1 und 2 beispielhaft näher erläutert. Es zeigen:
- Fig. 1:: ein Blockschaltbild eines potentiometrischen Positions- oder Winkelsensors mit einer Folgeschaltung; und
- Fig. 2:: ein detailliertes Schaltbild des Positionssensors in Fig. 1.

Fig. 1 zeigt ein Blockschaltbild eines potentiometrischen Positions- oder Winkelsensors, der z. B. in Meßseil-Positionssensoren zur Anwendung kommt. Das Sensorelement, hier ein Potentiometer 8, ist über drei externe Anschlußleitungen 1, 2, 3 mit einem Zweidraht-Meßumformer 10 verbunden. Der Meßumformer 10 umfaßt einen aktiven Schaltungsteil 11 sowie eine Beschaltung zur Verbesserung der Stõrfestigkeit des Meßgerätes. Der dargestellte Zweidraht-Meßumformer formt die von dem Potentiometer ausgegebenen Meßsignale in ein einheitliches Gleichstromsignal mit eingeprägter Stromstärke um, das von einer ausgangsseitig angeschlossenen Folgeelektronik 9 ausgewertet wird.

Die Folgeelektronik 9 liefert eine Betriebsspannung, die dem Meßumformer 10 über zwei ausgangsseitige Anschlußleitungen 4, 5 zugeführt wird.

In die eingangsseitigen Anschlußleitungen 1, 2, 3 ist jeweils eine Induktivität ZS1, ZS2 bzw. ZS3 eingefügt, die eine Mindest-Quellimpedanz für ein auf den Anschlußleitungen 1, 2, 3 geführtes Störsignal bilden. Der andere Anschluß der in die Anschlußleitungen 1 und 3 eingefügten Impedanzen ZS1 und ZS3 ist mit dem aktiven Schaltungsteil 11 des Meßumformers 10 verbunden. Der zweite Anschluß der in die Anschlußleitung 2 eingefügten Impedanz führt auf einen Schaltungsknoten K1, der jeweils über einen Kondensator ZP1, ZP2 mit den eingangsseitigen Anschlußleitungen 1 und 3 verbunden ist und einen abgeglichenen Schaltungsknoten bildet. Dieses Knotenpotential wird dem aktiven Teil 11 der Meßumformerschaltung 10 zugeführt. Eine vorhandene Gleichtaktstörung wird dort auf wenigstens einen störungsempfindlichen Schaltungsknoten geleitet. Die durch die Induktivitäten ZS1 bis ZS3 vorgegebene Quellimpedanz führt in Verbindung mit den Kapazitäten ZP1, ZP2 zu einer gleichmäßigen Bedämpfung der Gleichtaktstörspannungen. Die Entstehung von differentiellen Störspannungen, die sich dem Meßsignal als Fehlerspannung überlagern können, wird durch die Kapazitäten ZP1 und ZP2 verhindert.

Eine zwischen die Anschlußleitungen 1 und 3 geschaltete Kapazität ZP7 bewirkt eine zusätzliche Bedämpfung differentieller Störspannungen auf den betreffenden Leitern.

Die zu der Folgeschaltung führenden Anschlußleitungen 4 und 5 weisen Induktivitäten ZS4, ZS5 auf, die eine Mindest-Quellimpedanz für ein Gleichtakt-Störsignal vorgeben. Die Induktivitäten ZS4 und ZS5 sind jeweils mit dem aktiven Schaltungsteil 11 und der Folgeelektonik 9 verbunden.

Ein auf den externen Anschlußleitungen 4 und 5 vorhandenes Gleichtaktstörsignal wird über eine symmetrische kapazitive Anordnung, bestehend aus einem ersten Kondensator ZP3, der mit der Anschlußleitung 4 verbunden ist, und einem Kondensator ZP4, der mit der Anschlußleitung 5 verbunden ist, auf einen dazwischenliegenden Schaltungsknoten K3 geführt und weiter auf einen oder mehrere relevante, d.h. störempfindliche Schaltungsknoten in dem aktiven Schaltungsteil 11 des Meßumformers 10 geleitet, so daß die Entstehung differentieller Störspannungen unterbunden wird.

Ein weiterer abgeglichener Schaltungsknoten K2 wird durch eine symmetrische kapazitive Anordnung aus Kapazitäten ZP5 und ZP6 geschaffen. Wie in Figur 2 zu sehen ist, steht dieser Knoten K2 mit dem abgeglichenen Schaltungsknoten K1 in Verbindung. Die am Meßumformereingang und am Meßumformerausgang auftretenden Gleichtaktstörsignale werden dadurch gegenseitig ausgetauscht und abgeglichen.

Der aktive Schaltungsteil 11 des Meßumformers 10 umfaßt drei Operationsverstärker OP1 bis OP3 und mehrere Widerstände R1 bis R8 und einen MOS-Transistor M1. Alle relevanten, d.h. störempfindlichen Schaltungsknoten des aktiven Schaltungsteils 11 sind mit wenigstens einem abgeglichenen Schaltungsknoten K1, K2 oder K3 verbunden. Der Verstärkereingang des Operationsverstärkers OP3, dem das Eingangssignal des Potentiometer- Schleiferanschlußes zugeführt wird, ist mit dem abgeglichenen Schaltungsknoten K1 (mittelbar über einen Widerstand R5) verbunden. Der ebenfalls störempfindliche Emitter-Anschluß des MOS-Transistors M1 ist an den abgeglichenen Schaltungsknoten K3 gekoppelt. Dieses Spannungspotential definiert einen virtuellen Nullpunkt in dem aktiven Schaltungsteil 11 des Meßumformers 10. Ein weiterer relevanter Schaltungsknoten ist außerdem die interne Referenzspannung, die das Potentiometer 8 mit einer stabilen Spannung versorgt.

Die vorgeschlagene Beschaltung eines Meßumformers mit kapazitiven und induktiven Elementen erzielt eine hervorragende Störfestigkeit des Meßsystems bei geringstern Aufwand.

## Patentansprüche

1. Störfester Meßumformer für potentiometrische Positions- oder Winkelsensoren, insbesondere zur Verwendung mit Meßseil-Positionssensoren, der über Anschlußleitungen (1-5) eingangsseitig mit einem Sensor (8) und ausgangsseitig mit einer Folgeelektronik (9) verbunden ist,
**dadurch gekennzeichnet, daß**
die eingangs- und ausgangsseitigen Anschlußleitungen (1,2,3,4,5) erste Impedanzen (ZS1 - ZS5) aufweisen und
wenigstens ein abgeglichener Schaltungsknoten (K1, K2, K3) vorgesehen ist, der über jeweils eine zweite Impedanz (ZP1-ZP6) mit den eingangs- oder ausgangsseitigen Anschlußleitungen (1-5) sowie mit einem störempfindlichen Schaltungsknoten (K0, K1) des elektronischen Meßumformers (10) verbunden ist.

2. Störfester Meßumformer nach Anspruch 1,
**dadurch gekennzeichnet, daß**
die in die Anschlußleitungen (1-5) eingefügten ersten Impedanzen (ZS1-ZS5) Induktivitäten sind.

3. Störfester Meßumformer nach einem der vorhergehenden Ansprüche,
**dadurch gekennzeichnet, daß**
die zwischen die abgeglichenen Schaltungsknoten (K1-K3) und die Anschlußleitungen (1-5) eingefügten zweiten Impedanzen (ZP1 -ZP6) Kondensatoren sind.

4. Störfester Meßumformer nach einem der vorhergehenden Ansprüche,
**dadurch gekennzeichnet, daß**
ein abgeglichener eingangsseitiger Schaltungsknoten (K1) mit wenigstens einem abgeglichenen ausgangsseitigen Schaltungsknoten (K2) verbunden ist.

5. Störfester Meßumformer nach einem der vorhergehenden Ansprüche,
**dadurch gekennzeichnet, daß**
die Ankopplung der abgeglichenen Schaltungsknoten (K1 - K3) an die externen Anschlußleitungen (1 - 5) symmetrisch erfolgt.

6. Störfester Meßumformer nach einem der vorhergehenden Ansprüche,
**dadurch gekennzeichnet, daß**
jeweils die ersten Impedanzen (ZS1 - ZS5) oder die zweiten Impedanzen (ZP1, ZP1 - ZP6) gleich groß sind:

7. Störfester Meßumformer nach einem der vorhergehenden Ansprüche,
**dadurch gekennzeichnet, daß**
der Sensor (8) ein Potentiometer mit Schleiferanschluß (12) ist.

8. Störfester Meßumformer nach Anspruch 7,
**dadurch gekennzeichnet, daß**
der Schleiferanschluß (12) mit einer ersten Impedanz (ZS2) verbunden ist.

9. Störfester Meßumformer nach Anspruch 8,
**dadurch gekennzeichnet, daß**
die Impedanz (ZS2) des Schleiferanschlusses (12) mit einem abgeglichenen Schaltungsknoten (K1) verbunden ist.

10. Störfester Meßumformer nach nach einem der vorhergehenden Ansprüche,
**dadurch gekennzeichnet, daß**
einer der abgeglichenen Schaltungsknoten (K0) den virtuellen Nullpunkt eines aktiven Teils des Meßumformers (10) bildet.

11. Störfester Meßumformer nach einem der vorhergehenden Ansprüche,
**dadurch gekennzeichnet, daß**
zwischen die eingangs- oder ausgangsseitigen Anschlußleitungen (1 - 5) eine Impedanz (ZP7) zur Vermeidung differentieller Störspannungen geschaltet ist.

12. Verfahren zur Erhöhung der Störfestigkeit eines elektronischen Meßsystems, insbesondere eines potentiometrischen Positions- oder Winkelsensors, gegen leitungsbehaftete hochfrequente elektromagnetische Störungen, mit einem Meßumformer (10), der über Anschlußleitungen (1-5) eingangsseitig mit einem Sensor (8) und ausgangsseitig mit einer Folgeelektronik (9) verbunden ist,
**dadurch gekennzeichnet, daß**
die auf den eingangs- oder ausgangsseitigen Anschlußleitungen (1-5) geführten elektromagnetischen Gleichtaktstörungen über eine Anordnung von ersten und zweiten Impedanzen (ZS1-ZS5;ZP1-ZP6) wenigstens auf einen störungsempfindlichen Schaltungsknoten (K0, K1) des Meßumformers (10) geführt werden.

13. Verfahren zur Erhöhung der Störfestigkeit eines elektronischen Meßsystems nach Anspruch 12,
**dadurch gekennzeichnet, daß**
die auf den eingangs- oder ausgangsseitigen Anschlußleitungen (1-5) geführten elektromagnetischen Gleichtaktstörungen gleichmäßig auf alle störungsempfindlichen Schaltungsknoten (K0, K1) des Meßumformers (10) geführt werden

14. Verfahren zur Erhöhung der Störfestigkeit eines elektronischen Meßsystems nach einem der vorhergehenden Verfahrensansprüche
die auf den eingangs- oder ausgangsseitigen Anschlußleitungen (1 - 5) geführten hochfrequenten elektromagnetischen Gleichtaktstörungen über jeweils eine in eine Anschlußleitung (Z1-Z5) eingefügte erste Impedanz und eine zwischen die Anschlußleitung (1 - 5) und einen abgeglichenen Schaltungsknoten (K1- K3) geschaltete zweite Impedanz (ZP1-ZP6) auf wenigstens einen störungsempfindlichen Schaltungsknoten (K0,K1) der Meßumformerschaltung geführt werden.

15. Verfahren zur Erhöhung der Störfestigkeit eines elektronischen Meßsystems nach einem der vorhergehenden Verfahrensansprüche,
**dadurch gekennzeichnet, daß**
die Ankoppelung der relevanten störungsempfindlichen Schaltungsknoten (K0,K1) an die externen Anschlußleitungen (1 -5) symmetrisch erfolgt.

16. Verfahren zur Erhöhung der Störfestigkeit eines elektronischen Meßsystems nach einem der vorhergehenden Verfahrensansprüche,
**dadurch gekennzeichnet, daß**
die in die externen Anschlußleitungen (1-5) eingefügten ersten Impedanzen (ZS1 - ZS5) Induktivitäten und die zwischen die externen Anschlußleitungen (1-5) und die abgeglichenen Schaltungsknoten (K1 -K3) eingefügten zweiten Impedanzen (ZP1-ZP6) Kondensatoren sind.

17. Verfahren nach einem der vorhergehenden Verfahrensansprüche,
**dadurch gekennzeichnet, daß**
die auf den eingangsseitigen Anschlußleitungen (1-3) geführten hochfrequenten elektromagnetischen Störgrößen mit den auf den ausgangsseitigen (4, 5) geführten hochfrequenten elektromagnetischen Störgrößen gekoppelt werden.

18. Verfahren nach einem der vorhergehenden Verfahrensansprüche,
**dadurch gekennzeichnet, daß**
auf den Anschlußleitungen (1-5) geführte hochfrequente differentielle Störgrößen über wenigstens eine zwischen die Anschlußleitungen (1-5) geschaltete Impedanz (ZP1-ZP7) abgeleitet werden.
